# EUROPÄISCHE PATENTSCHRIFT

(11) **EP 1 944 418 B1**
(45) Veröffentlichungstag und Bekanntmachung des Hinweises auf die Patenterteilung: **11.07.2012**
(21) Anmeldenummer: 07000432.0
(22) Anmeldetag: 10.01.2007
(51) Int. Cl.: E03C 1/02, F16L 11/16, B05B 15/06, E03C 1/04

(54) **Wasserauslaufarmatur**
Water overflow fitting
Armature d'évacuation d'eau

(43) Veröffentlichungstag der Anmeldung: 16.07.2008
(73) Patentinhaber: KWC AG, 5726 Unterkulm (CH)
(72) Erfinder: Alder, Hans-Ulrich, 5054 Mossleerau (CH); Lehner, Michael, 5722 Graenichen (CH); Graber, Heinz, 5727 Oberkulm (CH)
(74) Vertreter: Schaad, Balass, Menzl & Partner AG

(56) Entgegenhaltungen:
- FR-A- 1 049 373
- FR-A- 1 593 155
- US-A- 2 133 020
- US-A- 5 749 179
- US-A1- 2003 146 307

## Beschreibung

Die vorliegende Erfindung betrifft eine Wasserauslaufarmatur gemäss Oberbegriff des Anspruches 1.

Bei der in der EP-A-0 296 470 offenbarten Wasserauslaufarmatur ist eine ausziehbare Handbrause, die im Ruhezustand in einer auf einem Waschtisch angeordneten Führung gehalten ist, über einen Schlauch mit dem Auslass einer Mischarmatur verbunden. Über den Schlauch ist eine schraubenförmige Druckfeder gezogen, die sich am einen Ende an einer Anschlussstelle der Mischarmatur und am ändern Ende an der Führung für die Handbrause abstützt. Bei in die Führung eingelegter Handbrause verläuft die Druckfeder mit dem Schlauch in einer Schlaufe. Wird die Handbrause aus ihrer Führung herausgezogen, so wird diese Schlaufe verkürzt und die Druckfeder entsprechend weiter zusammengedrückt. Wird die Handbrause wieder in die Führung zurückgeführt, so entspannt sich die Druckfeder wieder zu einer grösseren Schlaufe und zieht dabei den Schlauch zurück. Die den Schlauch umgebende Druckfeder sorgt somit beim Zurücklegen der Handbrause in die Führung für eine einwandfreie Rückführung des Schlauches.

In der US 2003/0146307 A1 ist eine Wasserauslaufarmatur beschrieben, die einen flexiblen Wasserführungsschlauch aufweist, der am einen Ende an eine Wasserzuleitung anschliessbar ist und am anderen Ende mit einem Brausenkopf verbunden ist. Ferner ist ein U-förmiges Auflageelement vorhanden, das einen Kanal aufweist, der im Querschnitt halbkreisförmig ist und das den Schlauch abstützt. Der Schlauch liegt im nach der einen Seite hin offenen Kanal des Auflageelementes und kann vom Auflageelement abgehoben werden.

Aus der US-A-5 749 179 ist eine Wasserauslaufarmatur bekannt, bei der ein Wasserführungsschlauch über einen Teil seiner Länge von einer Schraubenfeder umgeben ist, die dazu dient, einen Teil des Wasserführungsschlauches in einer vertikalen Position zu halten. Der Wasserführungsschlauch besteht aus einem Gummischlauch, der von einem flexiblen Mantel aus rostfreiem Stahl umgeben ist.

Die in der US-A-2 133 020 offenbarte Wasserauslaufarmatur weist einen flexiblen Wasserführungsschlauch auf, der am einen Ende gekrümmt ist und einen Brausenkopf trägt. Im Bereich seines gekrümmten Endes ist der Wasserführungsschlauch lose von einer Schraubenfeder umgeben, die dazu dient, den Wasserführungsschlauch in diesem Bereich gekrümmt zu halten.

In der FR-A-1 593 155 ist eine Rohrleitung beschrieben, die einen flexiblen Wasserführungsschlauch aufweist, der auf der Aussenseite von einem Mantelelement umgeben ist. Im Innern des Wasserführungsschlauches verläuft eine formgebende Schraubenfeder. Innerhalb der Schraubenfeder verläuft ein starrer, jedoch deformierbarer Stab.

Eine gattungsgemässe Wasserauslaufarmatur ist in der DE-A-10 2005 035 483 beschrieben, bei der zwischen einer Mischbatterie und einem Brausenkopf eine formbare Wasserleitung angeordnet ist. Diese Wasserleitung weist einen wasserführenden Schlauch auf, der von einem biegbaren Mantelelement umgeben ist. Das Mantelelement weist zwei schraubenlinienförmige Teile auf, nämlich eine Innenwendel und eine Aussenwendel, die um die Innenwendel gewickelt ist. Mindestens eine dieser Wendeln ist als eine auf Zug wirkende Schraubenfeder ausgebildet, die durch das Ineinanderwickeln der Wendeln auf Vorspannung gehalten ist. Dadurch wird ein Verschieben der Wendeln gegeneinander infolge Haftreibung gehemmt und das Mantelelement behält seine durch Biegen erreichte Form bei. Mit einer solchen Ausgestaltung des Mantelelementes wird erreicht, dass die Wasserleitung verschiedene Biegestellungen einnehmen kann und in der jeweiligen Biegestellung verbleibt.

Der vorliegenden Erfindung liegt nun die Aufgabe zugrunde, eine Wasserauslaufarmatur der eingangs genannten Art zu schaffen, bei der der Brausenkopf nach dem Herausbewegen aus einer Ruheposition automatisch in diese Ruheposition zurückkehren kann und in dieser eine stabile Lage einnimmt.

Diese Aufgabe wird erfindungsgemäss mit einer Wasserauslaufarmatur mit den Merkmalen des Anspruches 1 gelöst.

Dank des gebogenen Federabschnittes, der auf seiner Aussenseite wie eine Druckfeder wirkt, hat das den Wasserführungsschlauch umgebende Mantelelement eine grosse Flexibilität und ermöglicht dem Brausenkopf eine grosse Bewegungsfreiheit. Zusammen mit den beiden Federabschnitten mit geradliniger Federachse sorgt der gebogene Federabschnitt des Mantelteils dafür, dass der Brausenkopf automatisch in seine Ruheposition zurückkehrt, in der der Brausenkopf unter der Wirkung aller Federabschnitte eine stabile Lage einnimmt.

Bevorzugte Weiterausgestaltungen der erfindungsgemässen Wasserauslaufarmatur bilden Gegenstand der abhängigen Ansprüche.

Im Folgenden werden anhand der Zeichnungen Ausführungsbeispiele des Erfindungsgegenstandes näher erläutert. Es zeigt rein schematisch:
- Fig. 1: eine Spülbrause in Seitenansicht,
- Fig. 2: die Spülbrause gemäss Fig. 1 im Längsschnitt,
- Fig. 3: den Verbindungsschlauch der Spülbrause gemäss Fig. 1 im Längsschnitt,
- Fig. 4: in einem gegenüber der Fig. 3 vergrösserten Massstab und im Längsschnitt einen Abschnitt des in Fig. 3 gezeigten Verbindungeschlauches,
- Fig. 5: in einem gegenüber der Fig. 3 vergrösserten Massstab und im Längsschnitt den einen Endbereich des in Fig. 3 gezeigten Verbindungsschlauches, und
- Fig. 6: in einem gegenüber der Fig. 2 vergrößerten Massstab und im Längsschnitt den unteren Teil der in Fig. 2 gezeigten Spülbrause.

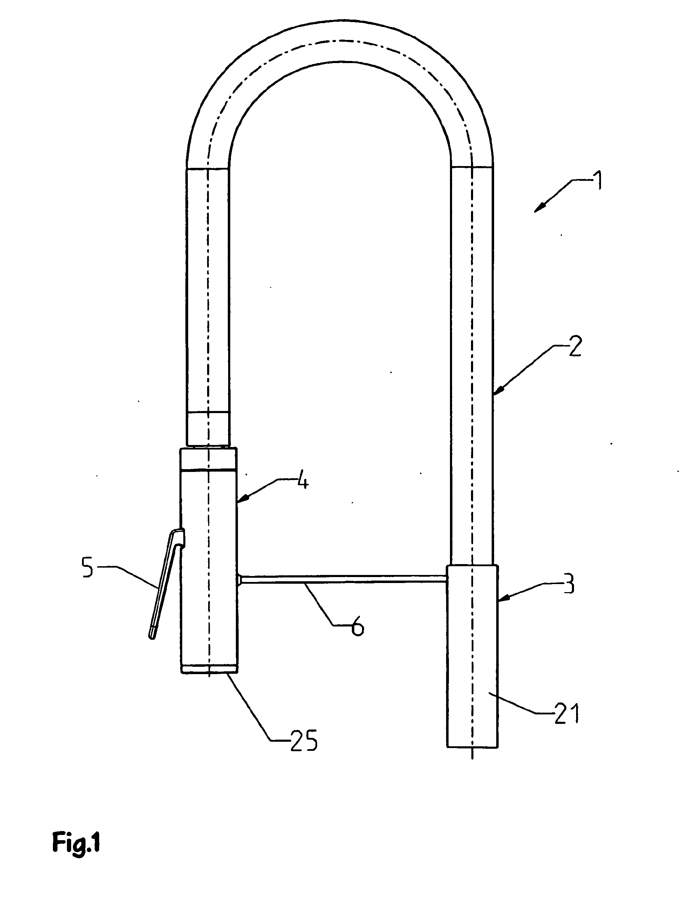

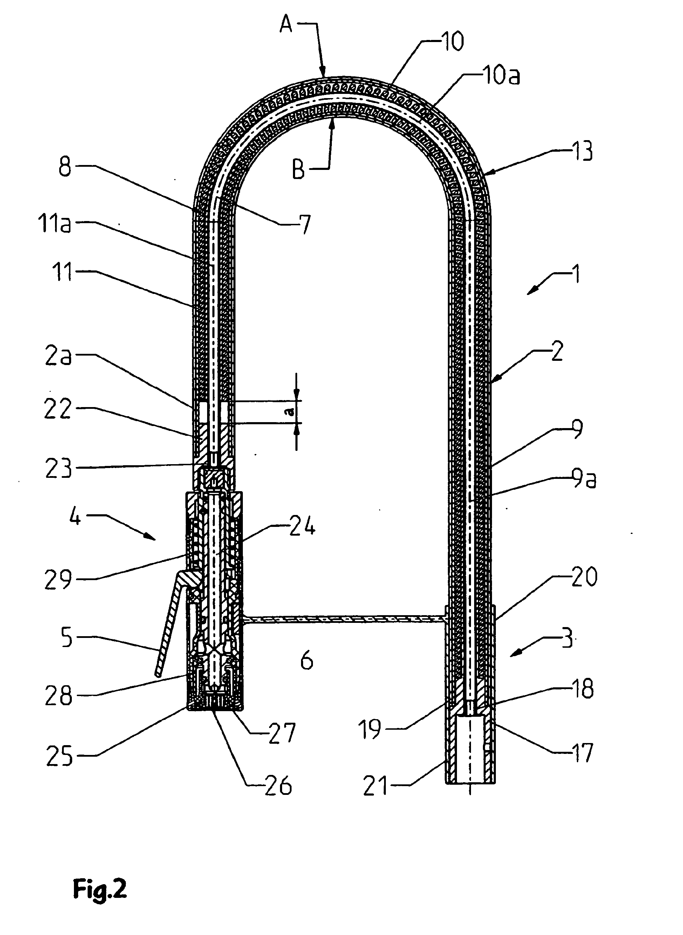

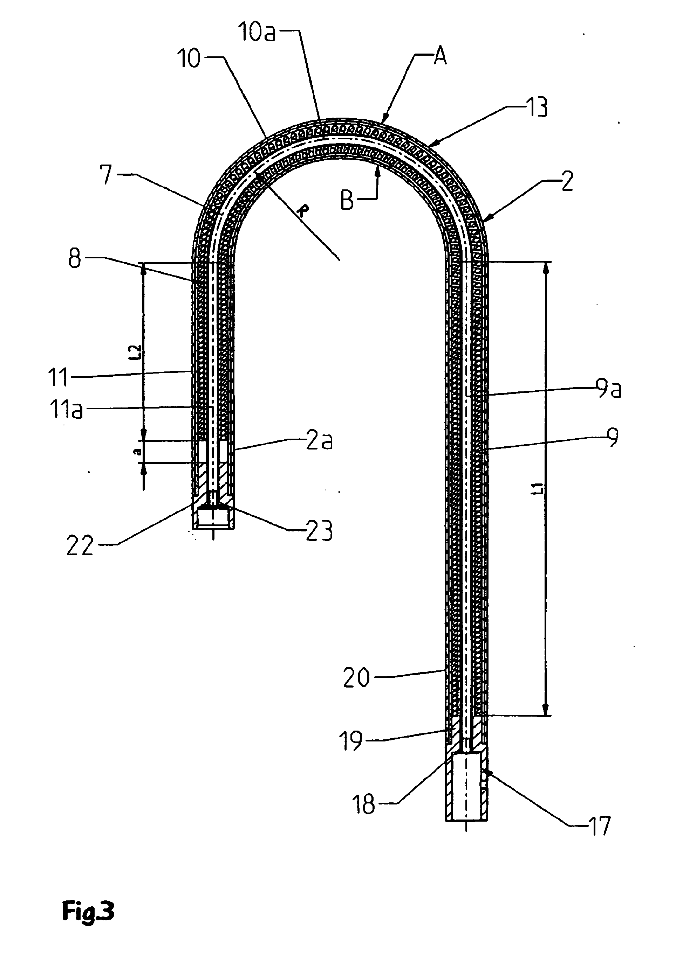

In den Fig. 1 und 2 ist in Seitenansicht bzw. im Schnitt eine Spülbrause 1 in ihrer Ruheposition gezeigt. Diese Spülbrause 1 weist einen flexiblen Verbindungsschlauch 2 auf, oder am einen Ende mit einem Anschlusselement 3 verbunden ist und am andern Ende einen Brausenkopf 4 mit einem Betätigungshebel 5 trägt. Der Brausenkopf 4 ist in der gezeigten Ruheposition an einem Halter 6 gehalten, der vom Anschlusselement 3 wegragt. Das Anschlusselement 3 wird an eine nicht gezeigte Armatur angeschlossen. Wie insbesondere die Fig. 2 und 3 zeigen umfasst der Verbindungsschlauch 2 einen flexiblen Wasserführungsschlauch 7, der von einem Mantelelement 8 umgeben ist, das durch eine Schraubenfeder gebildet ist. Der Konstruktion dieses Mantelelementes 8 wird nun anhand der Fig. 2 - 5 erläutert.

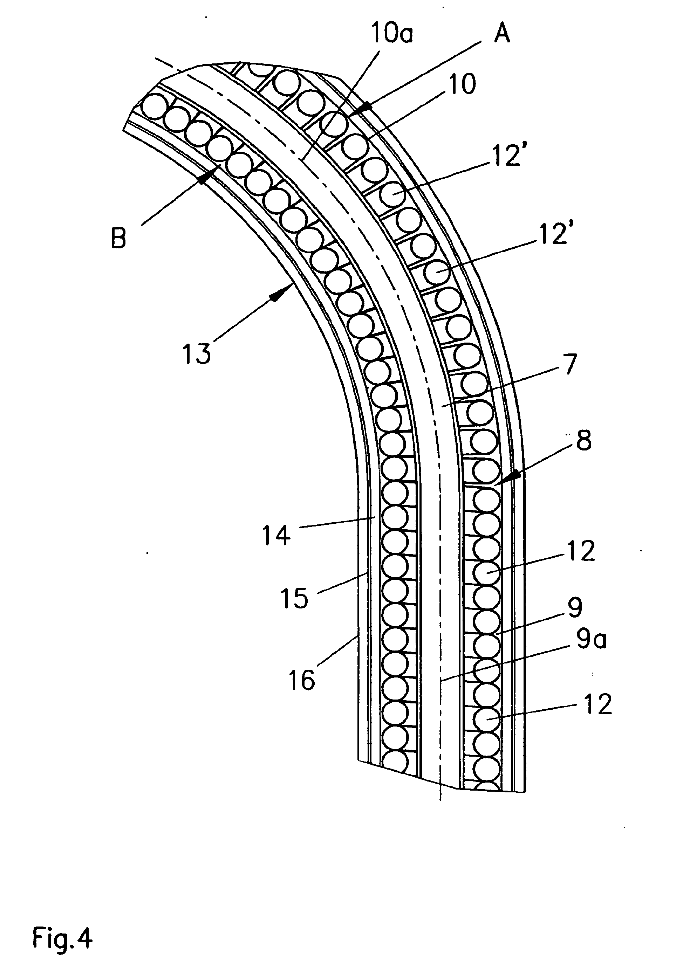

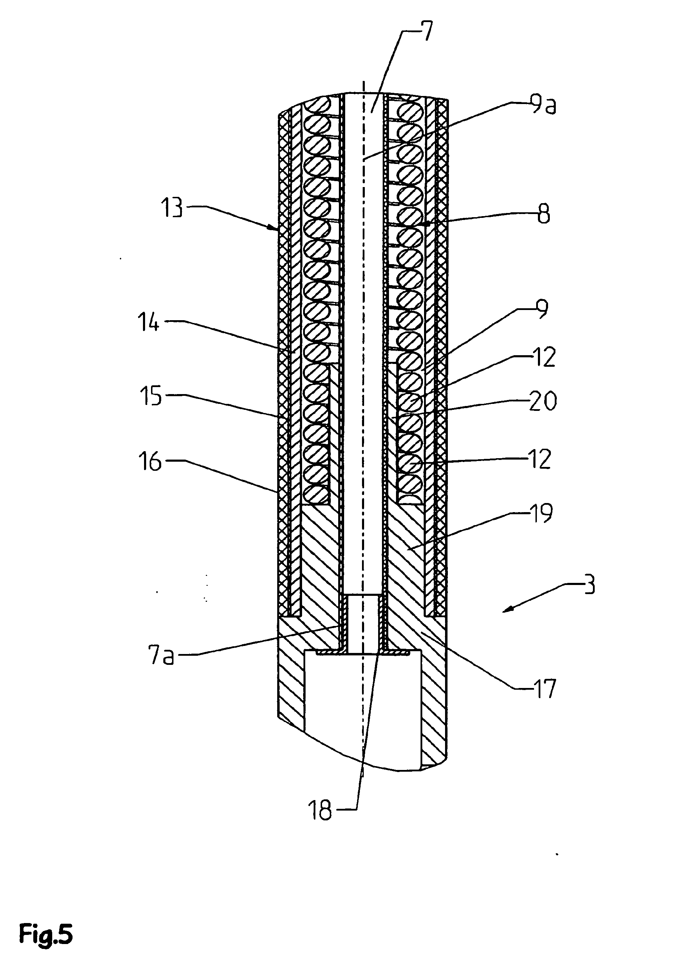

Das Mantelelement 8, d.h. die aus einem Stück bestehende, vorzugsweise mit Vorspannung gewickelte, einspiralige Schraubenfeder, besteht aus einem ersten, aufrecht stehenden Federabschnitt 9 mit geradliniger Federachse 9a, einem an letzteren anschliessenden, zweiten, gebogenen Federabschnitt 10 mit gekrümmter Federachse 10a und einem dritten, ebenfalls aufrecht stehenden Federabschnitt 11 mit ebenfalls geradliniger Federachse 11a, der an den zweiten Federabschnitt 10 anschliesst. Im in den Figuren dargestellten Ruhezustand liegen in den beiden Federabschnitten 9 und 11 die Windungen 12 der Schraubenfeder vorzugsweise unter Vorspannung aneinander an, während im gebogenen Federabschnitt 10 die Windungen 12' auf dessen Aussenseite A in einem gegenseitigen Abstand verlaufen und nur an dessen Innenseite B aneinander anliegen, vorzugsweise unter Vorspannung (siehe insbesondere die Fig. 4 und 5). Auf seiner Aussenseite A wirkt der zweite, gebogene Federabschnitt 10 wie eine Druckfeder, während dieser zweite Federabschnitt 10 auf seiner Innenseite B eine Zugfederwirkung entfaltet.

Um das Mantelelement 8 herum verläuft ein schlauchförmiger Schutzmantel 13, der von bekannter Bauart ist. Der Schutzmantel 13 schützt das Mantelelement 8 vor Verschmutzung.

Wie die Figuren 2, 3, 5 und 6 zeigen, weist das Anschlusselement 3 ein Anschlussstück 17 auf, durch das der Wasserführungsschlauch 7 hindurch verläuft. Das einlassseitige Ende 7a des Wasserführungsschlauches 7 ist mittels eines Klemmstückes 18 im Anschlussstück 17 verankert. Wie die Figur 5 zeigt, wird dabei das einlassseitige Ende 7a des Wasserführungsschlauches 7 zwischen dem Klemmstück 18 und dem Anschlussstück 17 festgeklemmt. Das Anschlussstück 17 weist ein Halteteil 19 mit kleinerem Durchmesser auf, über das das Ende des schlauchförmigen Schutzmantels 13 gestülpt ist (Fig. 5). Auf diese Weise wird der Schutzmantel 13 mit dem Anschlussstück 17 verbunden. Dieses Anschlussstück 17 weist ferner ein rohrförmiges Stützelement 20 auf, das einen kleineren Durchmesser hat als das Halteteil 19 und an dieses anschliesst. Das rohrförmige Stützelement 20 wird vom Ende des Mantelelementes 8, d.h. vom Ende des ersten Federabschnittes 9, umschlossen und sorgt für ein Abstützen dieses Endes des ersten Federabschnittes 9. Auf diese Weise wird ein Abknicken der Schraubenfeder am Anschlusselement 3 verhindert.

Wie die Figuren 1, 2 und 6 zeigen, weist das Anschlusselement 3 eine Aussenhülse 21 auf, die das Anschlussstück 17 umgibt. An dieser Anschlusshülse 21 ist der wegragende Halter 6 für den Brausenkopf 4 befestigt.

Am auslassseitigen Ende des Verbindungsschlauches 2 weist dieser ein Anschlussteil 22 auf, das dem Anschlussstück 17 entspricht. Der Wasserführungsschlauch 7 ist, gleich wie auf der Einlassseite, mittels eines Klemmstückes 23 im Anschlussteil 22 verankert. Der schlauchförmige Schutzmantel 13 ist ebenfalls gleich wie auf der Einlassseite über das Anschlussteil 22 gestülpt, wie das die Figuren 2 und 3 zeigen. Das Mantelelement 8, d.h. die Schraubenfeder, endet beim gezeigten Ausführungsbeispiel in einem Abstand a vor dem Anschlussteil 22. Das bedeutet, dass im entsprechenden Abschnitt 2a des Verbindungsschlauches 2 der Wasserführungsschlauch 7 nicht vom Mantelelement 8 umgeben ist. Somit ist der Verbindungsschlauch 2 in diesem Abschnitt 2a flexibler als über den Rest seiner Länge. Bei einer andern, nicht gezeigten Ausführungsform kann jedoch das Mantelelement, d.h. der dritte Federabschnitt 11, bis hin zum Anschlussteil 22 geführt werden. Dabei erfolgt die Befestigung des Endes des dritten Federabschnittes 11 auf dieselbe Weise wie die beschriebene Befestigung des Endes des ersten Federabschnittes 9 am Anschlussstück 17.

Am Anschlussteil 22 ist der Brausenkopf 4 befestigt (Fig. 2). Wie diese Figur 2 weiter zeigt, ist der Brausenkopf 4 mit einem Durchflusskanal. 24 versehen und trägt eine Austrittsdüse 25. Diese Austrittsdüse 25 weist einen inneren, zentralen Düsenteil 26 und einen ringförmigen äusseren Düsenteil 27 auf, der den inneren Düsenteil 26 umgibt. Im Innern des Brausenteils 4 ist verschiebbar ein Ventilkolben 28 geführt, der mittels einer Schliessfeder 29 in seiner Schliessstellung gehalten ist, in der er die Düsen der Düsenteile 26, 27 verschliesst.

Der Ventilkolben 28 kann mittels des Betätigungshebels 5 aus seiner Schliessstellung in zwei öffnungsstellungen verschoben werden. Wird der Betätigungshebel 5 in Richtung zum Brausenteil 4 hin in eine erste Stellung bewegt, so wird der Ventilkolben 28 entgegen der Kraft der Schliessfeder 29 in eine erste Öffnungsstellung bewegt, in der er sowohl die Düsen des inneren Düsenteils 26 wie auch die Düsen des äusseren Düsenteils 27 freigibt. Wird der Betätigungshebel 5 aus dieser ersten Stellung weiter in eine zweite Stellung verschwenkt, so wird der Ventilkolben 28 in eine zweite Öffnungsstellung bewegt, in der der Wasserzufluss zu den Düsen des äusseren Düsenteils 27 unterbunden ist. Das bedeutet, dass das Wasser nur durch die Düsen des inneren Düsenteils 26 ausfliessen kann. Der dabei aus dem inneren Düsenteil 26 austretende Wasserstrahl ist intensiver, da ja der Wasseraustritt aus den Düsen des äusseren Düsenteils 27 gesperrt ist.

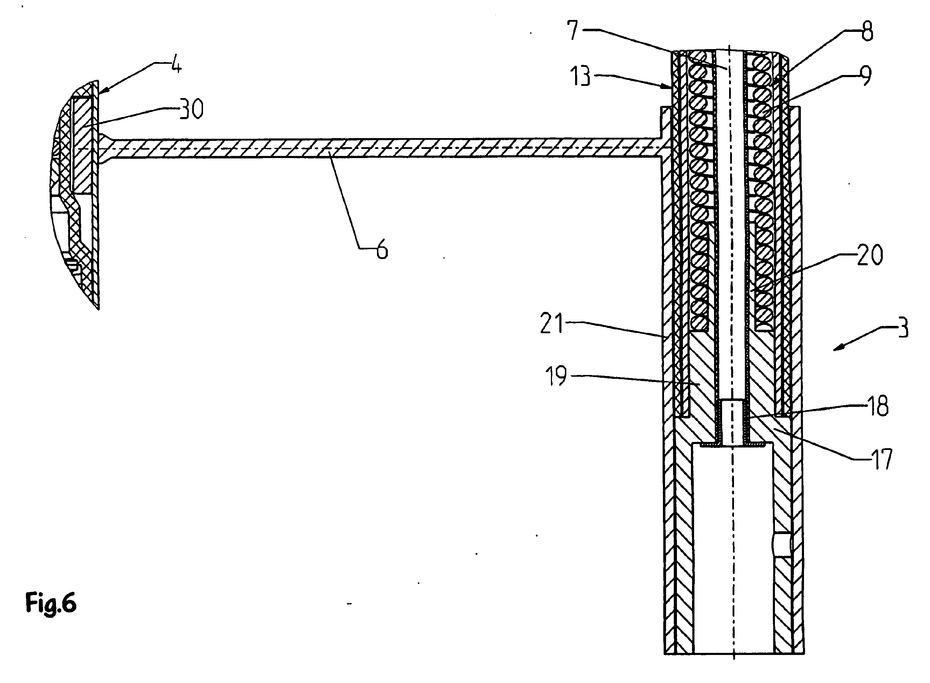

Um den Brausenkopf 4 in seiner Ruheposition zu sichern, ist im Innern des Brausenkopfes 4 ein Magnetelement 30 angeordnet, das mit dem metallischen Halter 6 zusammenwirkt (Fig. 6).

Für den Gebrauch wird der Brausenkopf 4 von Hand vom Halter 6 weggezogen und kann dank des zweiten, gebogenen Federabschnittes 10 ohne grosse Kraftanstrengung innerhalb eines grossen Bereiches bewegt werden. Für die Vergrösserung des Einsatzbereiches des Brausenkopfes 4 kann mit erhöhter Kraft am Brausenkopf 4 gezogen werden, so dass auch die beiden andern Federabschnitte 9 und 11 verformt werden.

Wird der Brausenkopf 4 wieder losgelassen, so kehrt er unter der Wirkung des ersten und dritten Schraubenfederabschnittes 9 und 11 und mit Unterstützung des zweiten, gebogenen Federabschnittes 10 automatisch wieder in die Ruheposition zurück. In dieser Ruheposition nimmt die Spülbrause 1 dank der Federabschnitte 9 und 11 eine stabile Lage ein.

Bei einer bevorzugten Ausführungsform, bei der das Gewicht des Brausenkopfes 4 ca. 300 Gramm beträgt, besteht die das Mantelelement 8 bildende Schraubenfeder aus einem Draht aus rostfreiem Federstahl mit einem Durchmesser von 3 mm. Der Aussendurchmesser der Schraubenfeder beträgt 15 mm. Bei einer Gesamtlänge der Schraubenfeder von ca. 650 mm beträgt die Länge L1 des ersten Federabschnittes 9 ca. 300 mm und die Länge L2 des dritten Federabschnittes 11 etwa 114 mm (siehe Fig. 2). Der Radius R des Bogens, entlang dem sich die Federachse 10a des zweiten Federabschnittes 10 erstreckt, beträgt dabei 65 mm.

Der Erfindungsgegenstand ist vorstehend anhand einer Spülbrause, wie sie in Küchen Verwendung findet, erläutet worden. Es versteht sich, dass sich die erfindungsgemässe Wasserauslaufarmatur auch für andere Einsatzzwecke eignet, z.B. für eine Duschbrause.

Beim in den Figuren 1-6 gezeigten Ausführungsbeispiel verlaufen die beiden Federabschnitte 9 und 11 in vertikaler Richtung. Es ist aber auch denkbar, dass beide dieser Federabschnitte 9, 11 oder nur einer davon in einer anderen Richtung verläuft, so z.B. in horizontaler Richtung.

Im Weiteren ist es auch denkbar, bei der erfindungsgemässen Wasserauslaufarmatur eine Schraubenfeder einzusetzen, die ausser den beiden Federabschnitten 9, 11 mit geradliniger Federachse 9a, 11a, die über den gebogenen Federabschnitt 10 miteinander verbunden sind, noch weitere Federabschnitte mit geradliniger Federachse aufweist, die jeweils mit einem gebogenen Federabschnitt mit dem nächsten Federabschnitt mit geradliniger Federachse verbunden sind. Bei einer solchen Ausführungsform hat die Schraubenfeder zumindest über einen Teil ihrer Länge eine mäanderartige Form.

## Patentansprüche

1. Wasserauslaufarmatur mit einem flexiblen Wasserführungsschlauch (7), der am einen Ende an eine Wasserzuleitung anschliessbar und am andern Ende mit einem Brausenkopf (4) verbunden ist, und mit einem den Wasserzuführungsschlauch (7) umgebenden, biegbaren, formgebenden Mantelelement (8), das zwei Abschnitte (9, 11) mit geradliniger Achse (9a, 11a) und einen zwischen diesen beiden Abschnitten (9, 11) angeordneten, gebogenen, dritten Abschnitt (10) mit gekrümmter Achse (10a) aufweist und das von einem flexiblen, schlauchförmigen Schutzmantel (13) umgeben ist, **dadurch gekennzeichnet, dass** das Mantelelement (8) durch eine Schraubenfeder gebildet ist, deren Windungen (12, 12') im Ruhezustand in den Federabschnitten (9, 11) mit geradliniger Federachse (9a, 11a) aneinander anliegen und im dritten Federabschnitt (10) mit gekrümmter Federachse (10a) auf der Innenseite (B) des dritten Federabschnitts (10) aneinander anliegen und auf dessen Aussenseite (A) in einem gegenseitigen Abstand angeordnet sind.

2. Wasserauslaufarmatur nach Anspruch 1, **dadurch gekennzeichnet, dass** das einlassseitige Ende des ersten Federabschnittes (9) mit geradliniger Federachse (9a) mittels eines ins Innere dieses Federabschnittes (9) eingreifenden, rohrförmigen Stützelementes (20) abgestützt ist, das vorzugsweise Teil eines an eine Armatur anschliessbaren Anschlussstückes (17) ist.

3. Wasserauslaufarmatur nach Anspruch 1 oder 2, **dadurch gekennzeichnet, dass** das einlassseitige
Ende (7a) des Wasserführungsschlauches (7) zwischen einem in das Innere des Wasserführungsschlauches (7) eingreifenden, rohrförmigen Klemmstück (18) und einem den Wasserführungsschlauch (7) umgebenden, an eine Armatur anschliessbaren Anschlussstück (17) festgeklemmt ist.

4. Wasserauslaufarmatur nach einem der Ansprüche 1 - 3, **dadurch gekennzeichnet, dass** das auslassseitige Ende des Wasserführungsschlauches (7) zwischen einem in das Innere des Wasserführungsschlauches (7) eingreifenden, rohrförmige Klemmstück (23) und einem den Wasserführungsschlauch (7) umgebenden, an den Brausenkopf (4) angeschlossenen Anschlussteil (22) festgeklemmt ist.

5. Wasserauslaufarmatur nach Anspruch 1, **dadurch gekennzeichnet, dass** der Schutzmantel (13) am auslassseitigen Ende mit einem Anschlußteil (22) verbunden ist, das an den Brausenkopf (4) angeschlossen ist.

6. Wasserauslaufarmatur nach Anspruch 5, **dadurch gekennzeichnet, dass** das auslassseitige Ende des Mantelelementes (8) in einem Abstand (a) vom Anschlussteil (22) endet.

7. Wasserauslaufarmatur nach Anspruch 5, **dadurch gekennzeichnet, dass** das auslassseitige Ende des zweiten Federabschnittes (11) mit geradliniger Federachse (11a) mittels eines ins Innere dieses Federabschnittes (11) eingreifenden, rohrförmigen Stützelementes abgestützt ist, das vorzugsweise Teil des Anschlussteils (22) ist.

8. Wasserauslaufarmatur nach einem der Ansprüche 1 - 7, **dadurch gekennzeichnet, dass** im montierten Zustand und in der Ruheposition der Wasserauslaufarmatur (1) der erste Federabschnitt (9) mit geradliniger Federachse (9a) aufrecht steht.

9. Wasserauslaufarmatur nach Anspruch 8 **dadurch gekennzeichnet, dass** im montierten Zustand und in der Ruheposition der zweite Federabschnitt (11) mit geradliniger Federachse (11a) etwa parallel zum ersten Federabschnitt (9) mit geradliniger Federachse (9a) verläuft.

10. Wasserauslaufarmatur nach einem der Ansprüche 1 - 9, **gekennzeichnet durch** einen Halter (6) zum Fixieren des Brausenkopfes (4) in seiner Ruheposition, an dem der Brausenkopf (4) mittels Magnetkraft lösbar gehalten ist.

11. Verwendung der Wasserauslaufarmatur nach einem der Ansprüche 1 - 10 als Spülbrausenarmatur (1).

12. Verwendung der Wasserauslaufarmatur nach einem der Ansprüche 1 - 10 als Duschbrausenarmatur.

## Claims

1. Water outlet fitting with a flexible water feed pipe (7) which at the one end may be connected to a water supply and at the other end is connected to a spray head (4), and with a bendable, shaping casing element (8) surrounding the water feed pipe (7), which comprises two portions (9, 11) having a straight axis (9a, 11a) and a bent third portion (10) having a curved axis (10a) arranged between these two portions (9, 11) and which is surrounded by a flexible tube-shaped protective casing (13), **characterized in that** the casing element (8) is formed by a tension spring the windings (12, 12') of which bear in the resting state against one another in the spring portions (9, 11) having a straight spring axis (9a, 11a), and bear against one another in the third spring portion (10) having a curved spring axis (10a) on the inner face (B) of the third spring portion (10), and are arranged on the outer face (A) thereof at a mutual distance.

2. Water outlet fitting according to claim 1, **characterized in that** the end of the first spring portion (9) on the inlet side having a straight spring axis (9a) is supported by means of a tubular support element (20) engaging in the inside of said spring portion (9), which is preferably part of a connecting piece (17) which may be connected to a fitting.

3. Water outlet fitting according to claim 1 or 2, **characterized in that** the end (7a) of the water feed pipe (7) on the inlet side is fixedly clamped between a tubular clamping piece (18) engaging in the inside of the water feed pipe (7) and a
connecting piece (17) surrounding the water feed pipe (7) and which may be attached to a fitting.

4. Water outlet fitting according to one of claims 1 - 3, **characterized in that** the end of the water feed pipe (7) on the outlet side is fixedly clamped between a tubular clamping piece (23) engaging in the inside of the water feed pipe (7) and a connecting part (22) surrounding the water feed pipe (7) and which is attached to the spray head (4).

5. Water outlet fitting according to claim 1, **characterized in that** the protective casing (13) on the outlet side end is connected to a connecting part (22) which is attached to the spray head (4).

6. Water outlet fitting according to claim 5, **characterized in that** the outlet side end of the casing element (8) terminates at a distance (a) from the connecting part (22).

7. Water outlet fitting according to claim 5, **characterized in that** the end of the second spring portion (11) on the outlet side having a straight spring axis (11a) is supported by means of a tubular support element engaging in the inside of said spring portion (11), which is preferably part of the connecting part (22).

8. Water outlet fitting according to one of claims 1 to 7, **characterized in that** in the mounted state and in the resting position of the water outlet fitting (1) the first spring portion (9) having a straight spring axis (9a) stands upright.

9. Water outlet fitting according to claim 8, **characterized in that** in the mounted state and in the resting position the second spring portion (11) having a straight spring axis (11a) extends approximately parallel to the first spring portion (9) having a straight spring axis (9a).

10. Water outlet fitting according to one of claims 1 to 9, **characterized by** a holder (6) for fixing the spray head (4) in its resting position, on which the spray head (4) is releasable held by means of magnetic force.

11. Use of the water outlet fitting as claimed in one of claims 1 - 10, as a rinsing fitting (1).

12. Use of the water outlet fitting as claimed in one of claims 1 - 10, as a shower spray fitting.

## Revendications

1. Robinetterie d'écoulement d'eau comprenant un tuyau d'eau flexible (7), qui peut être raccordé à une extrémité à une conduite d'amenée d'eau et qui est connecté à l'autre extrémité à une tête de douche (4), et comprenant un élément d'enveloppe (8) flexible, entourant le tuyau d'alimentation d'eau (7) et lui donnant sa forme, lequel élément d'enveloppe présente deux portions (9, 11) avec un axe rectiligne (9a, 11a) et une troisième portion (10) d'axe courbe (10a) cintrée, disposée entre ces deux portions (9, 11), et lequel élément d'enveloppe est entouré par une enveloppe de protection flexible (13) en forme de tuyau, **caractérisée en ce que** l'élément d'enveloppe (8) est formé par un ressort hélicoïdal dont les spires (12, 12'), à l'état de repos, s'appliquent les unes contre les autres dans les portions de ressort (9, 11) d'axe de ressort rectiligne (9a, 11a) et s'appliquent les unes contre les autres dans la troisième portion de ressort (10) d'axe de ressort cintré (10a) du côté intérieur (B) de la troisième portion de ressort (10) et sont disposées sur le côté extérieur (A) de la troisième portion à distance les unes des autres.

2. Robinetterie d'écoulement d'eau selon la revendication 1, **caractérisée en ce que** l'extrémité du côté de l'entrée de la première portion de ressort (9) d'axe de ressort rectiligne (9a) est supportée au moyen d'un élément de support (20) tubulaire venant en prise à l'intérieur de cette portion de ressort (9), lequel élément de support fait de préférence partie d'une pièce de raccordement (17) pouvant être raccordée à un robinet.

3. Robinetterie d'écoulement d'eau selon la revendication 1 ou 2, **caractérisée en ce que** l'extrémité (7a) du côté de l'entrée du tuyau d'eau (7) est serrée fixement entre un élément de serrage (18) de forme tubulaire s'engageant à l'intérieur du tuyau d'eau (7) et une pièce de raccordement (17) pouvant être raccordée à un robinet, entourant le tuyau d'eau (7).

4. Robinetterie d'écoulement d'eau selon l'une quelconque des revendications 1 à 3, **caractérisée en ce que** l'extrémité du côté de la sortie du tuyau d'eau (7) est serrée fixement entre un élément de serrage (23) de forme tubulaire s'engageant à l'intérieur du tuyau d'eau (7) et une partie de raccordement (22) raccordée à la tête de douche (4), entourant le tuyau d'eau (7).

5. Robinetterie d'écoulement d'eau selon la revendication 1, **caractérisée en ce que** l'enveloppe de protection (13) est connectée au niveau de l'extrémité du côté de la sortie à une partie de raccordement (22) qui est raccordée à la tête de douche (4).

6. Robinetterie d'écoulement d'eau selon la revendication 5, **caractérisée en ce que** l'extrémité du côté de la sortie de l'élément d'enveloppe (8) se termine à une distance (a) de la partie de raccordement (22).

7. Robinetterie d'écoulement d'eau selon la revendication 5, **caractérisée en ce que** l'extrémité du côté de la sortie de la deuxième portion de ressort (11) d'axe de ressort rectiligne (11a) est supportée au moyen d'un élément de support de forme tubulaire venant en prise à l'intérieur de cette portion de ressort (11), lequel élément de support fait de préférence partie de la partie de raccordement (22).

8. Robinetterie d'écoulement d'eau selon l'une quelconque des revendications 1 à 7, **caractérisée en ce que**, dans l'état monté et dans la position de repos de la robinetterie d'écoulement d'eau (1), la première portion de ressort (9) d'axe de ressort rectiligne (9a) est verticale.

9. Robinetterie d'écoulement d'eau selon la revendication 8, **caractérisée en ce que**, dans l'état monté et dans la position de repos, la deuxième portion de ressort (11) d'axe de ressort rectiligne (11a) s'étend approximativement parallèlement à la première portion de ressort (9) d'axe de ressort rectiligne (9a).

10. Robinetterie d'écoulement d'eau selon l'une quelconque des revendications 1 à 9, **caractérisée par** un support (6) pour fixer la tête de douche (4) dans sa position de repos, sur lequel support la tête de douche (4) est maintenue de manière détachable au moyen d'une force magnétique.

11. Utilisation de la robinetterie d'écoulement d'eau selon l'une quelconque des revendications 1 à 10 en tant que robinetterie de douche de pré-rinçage (1).

12. Utilisation de la robinetterie d'écoulement d'eau selon l'une quelconque des revendications 1 à 10 en tant que robinetterie de douche.
